Europäisches Patentamt

European Patent Office

Office européen des brevets

(11) Publication number: **0 456 922 A1**

# EUROPEAN PATENT APPLICATION

(21) Application number: **90305154.8**

(22) Date of filing: **14.05.90**

(51) Int. Cl.⁵: **A47J 36/28**

(43) Date of publication of application:
**21.11.91 Bulletin 91/47**

(84) Designated Contracting States:
**AT BE CH DE DK ES FR GR IT LI LU NL SE**

(71) Applicant: **AUTO ALLOYS (INDUSTRIAL & DEFENCE) LTD.**
**Berristow Lane, Hilcote**
**Blackwell, Derbyshire DE55 5JB(GB)**

(72) Inventor: **Stephenson, Maurice**
**Elm House Farm, Crosby**
**Maryport, Cumbria(GB)**

(74) Representative: **Pattullo, Norman et al**
**Ian G. Murgitroyd and Company Mitchell**
**House 333 Bath Street**
**Glasgow G2 4ER Scotland(GB)**

(54) **Improvements in self heating food containers.**

(57) A self heating food container comprises a first container 1 for food to be heated located within a second container 3 which forms a chamber 4 around said first container, said chamber having a first portion 5 for receiving quicklime 6 and a second portion 7 for receiving water, wherein said first and second portions 5, 7 are separated by a liquid impermeable metallic material membrane in the form of an aluminium foil pouch 8 and wherein a liquid absorbent material membrane in the form of a cardboard ring 9 is provided between the quicklime 6 and the liquid impermeable membrane 8.

EP 0 456 922 A1

Rank Xerox (UK) Business Services

This invention relates to improvements in self heating food containers.

Self heating food containers have been produced by placing a can containing food inside another can. The space between the two cans then has a quantity of quicklime granules and a water pouch inserted. The can is activated by pulling a ring pull which works a spike or similar device which punctures the water pouch. Heat given off by the resultant reaction between the quicklime and water then heats the food. Alternatively a separate spike can be provided for puncturing the water pouch.

Our co-pending European Application No 88301725.3 describes a self heating food container of the above type in which the water is separated from the quicklime granules by a liquid impermeable metallic material membrane. This improves the shelf life of the product by preventing the absorption of water vapour by the quicklime over a period of time which would reduce its reactivity. This type of construction and other previously proposed constrictions suffer from the disadvantage however, that during and after use in certain circumstances excess water contaminated with quicklime can be expelled from the container.

According to the present invention there is provided a self heating food container comprising a first container for food to be heated located within a second container which forms a chamber around said first container, said chamber having a first portion for receiving quicklime and a second portion for receiving water, wherein said first and second portions are separated by a liquid impermeable metallic material membrane and wherein a liquid absorbent material membrane is provided between the quicklime and the liquid impermeable membrane.

Preferably the liquid absorbent membrane is a cardboard material ring.

Preferably also a plastics material ring seal is provided having a groove to locate the first container within the second container and forming a seal for the chamber around said first container.

Most preferably the plastics material ring seal has at least some frangible areas.

Preferably also said liquid impermeable membrane is formed by an aluminium pouch.

Preferably also said liquid impermeable membrane is plastics coated on one or both sides.

Preferably also the quicklime is a mixture of hardburnt and softburnt quicklime. Most preferably the softburnt quicklime is provided in a proportion of 15% - 19% of the total quicklime by weight.

Preferably also quicklime and water are provided in the first and second portions respectively in a ratio of 1 part quicklime to an amount of water in the range 0.55 to 0.7 parts by weight.

Most preferably the quicklime and water are provided in the first and second portions respectively in a ratio of 1 part quicklime to 0.63 parts of water by weight.

Preferably also the quicklime is provided in granular form, the diameter of the granules being in the range 1mm to 7mm.

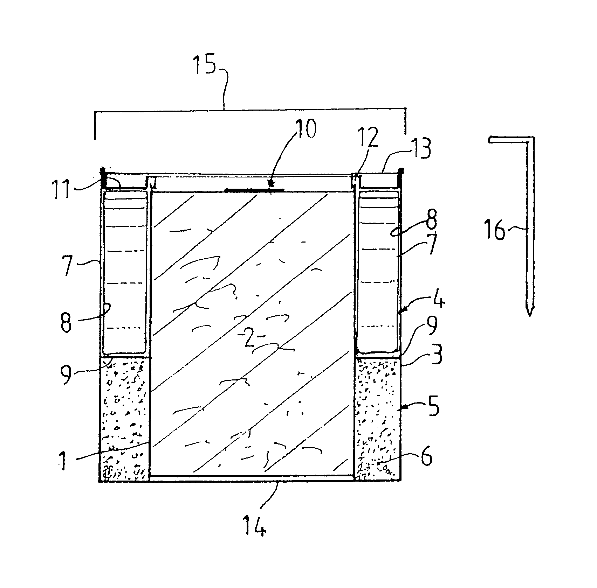

Embodiments of the present invention will now be described, by way of example, with reference to the accompanying drawing, which is an exploded sectional side view of a self heating food container in accordance with the present invention.

Referring to the drawing a self heating food container comprises an inner can 1, containing food 2 to be heated, located inside an outer can 3. The space between the inner can 1 and the outer can 3 defines an annular chamber 4. A first portion 5 of this chamber 4 is filled with a quantity of grains of quicklime 6. The quicklime is a mixture of hard burnt lime and soft burnt lime. The quicklime is also in granular form with the diameter of the granules being the range 1m to 7mm diameter. In the example illustrated a total of 160 gms of quicklime is used of which 25 - 30 gms is lightburnt. A second portion 7 of the chamber 4 contains a plastics coated aluminium foil pouch 8. This pouch 8 contains a quantity of water. The quantity of water comprises an amount in the range of 0.55 parts to 0.7 parts by weight to 1 part quicklime. It has been found that a ratio of 0.63 parts water to I part quicklime is most effective. The aluminium which forms the pouch is formed from a 9 or 12 micron thick foil coated on both sides with a plastics material. On one side the plastics material used is melanex of 12 micron thickness and on the other side the plastics material used is a polyethylene material again 12 microns thick.

In addition a cardboard material ring 9 is positioned in the chamber 4 between the quicklime 6 and the water pouch 8.

A ring pull top 10 is provided for the outer can 3 and a plastics insert seal 11 provides a complete hermetic seal for the container. A layer of polystyrene material (not shown) provides insulation for the can 3 and a second layer of polystyrene forms a printed label.

The container is assembled upside down. The seal 11 is placed on the top of the inner can 1 so that it engages a groove 12 which serves to centralise the inner can 1 within the outer can 3 when the can 1 and seal 11 assembly is inserted in the outer can 3 to engage a top ring 13 of the outer can 3. The pouch 8 is inserted at the same time followed by the cardboard ring 9 and a quantity of quicklime 6. A base 14 is then fitted to the outer can 3. A plastics material lid 15 is provided for the outer can 1.

In use, the lid 15 is removed and placed over the base 14 of the can and the top 9 is removed. The aluminium pouch 8 is punctured by inserting a metal or plastics spike 16 through each of three pre formed throughholes in the top ring 13 to penetrate the seal 11.

This initiates a reaction between the water and the quicklime which serves to heat the food 2 in the inner can 1 in a short period of time.

The limited amount of water in relation to the quicklime avoids problems which can occur with excess water when the reaction may be too quick causing emission of water vapour and lime particles.

In addition the cardboard material ring 9 absorbs any excess water thus further reducing the risk of emission of water vapour and lime particles during the reaction and avoiding the possibility of contaminated water spilling out later.

The aluminium foil pouch 8 provides a waterproof barrier between the water and the quicklime thus overcoming previous problems whereby the reactivity of the quicklime reduces in time due to a gradual absorption of water vapour transferred through the material of the barrier. The shelf life of the container is thus increased.

The seal 11 has an overlap with the top 13 of the outer can 3 wide enough to ensure that no leakage occurs as a result of distortion caused by the reaction.

Modifications and improvements may be incorporated without departing from the scope of the invention.

For example a paper, plastics or metal foil membrane may be provided between the top 13 of the outer can 3 and the seal 11 to provide a tamper evident seal.

## Claims

1. A self heating food container comprising a first container for food to be heated located within a second container which forms a chamber around said first container, said chamber having a first portion for receiving quicklime and a second portion for receiving water, wherein said first and second portions are separated by a liquid impermeable metallic material membrane and wherein a liquid absorbent material membrane is provided between the quicklime and the liquid impermeable membrane.

2. A self heating food container as claimed in Claim 1, wherein the liquid absorbent membrane is a cardboard material ring.

3. A self heating food container as claimed in Claim 1 or 2, wherein a plastics material ring seal is provided having a groove to locate the first container within the second container and forming a seal for the chamber around said first container.

4. A self heating food container as claimed in Claim 3, wherein the plastics material ring seal has at least some frangible areas.

5. A self heating food container as claimed in any one of the preceding Claims, wherein said liquid impermeable membrane is formed by an aluminium pouch.

6. A self heating food container as claimed in Claim 5, wherein said liquid impermeable membrane is plastics coated on one or both sides.

7. A self heating food container as claimed in any one of the preceding Claims, wherein the quicklime is a mixture of hardburnt and softburnt quicklime.

8. A self heating food container as claimed in Claim 7, wherein the softburnt quicklime is provided in a proportion of 15% - 19% of the total quicklime by weight.

9. A self heating food container as claimed in any one of the preceding Claims, wherein quicklime and water are provided in the first and second portions respectively in a ratio of 1 part quicklime to an amount of water in the range 0.55 to 0.7 parts by weight.

10. A self heating food container as claimed in any one of Claims 1 to 8, wherein the quicklime and water are provided in the first and second portions respectively in a ratio of 1 part quicklime to 0.63 parts of water by weight.

11. A self heating food container as claimed in any one of the preceding Claims, wherein the quicklime is provided in granular form, the diameter of the granules being in the range 1mm to 7mm.

12. A self heating food container substantially as hereinbefore described with reference to and as shown in accompanying drawings.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| E | GB-A-2 225 104 (CELESTIC HOTCAN LTD) <br> * the whole document * | 1-12 | A 47 J 36/28 |
| A | US-A-2 935 983 (REIK) <br> * column 3, line 68 - column 4, line 11; figures 1, 5 * | 1,2 | |
| D,A | EP-A-0 281 342 (CELESTIC LTD) <br> * the whole document * | 1,3-12 | |
| A | EP-A-0 082 834 (APELLANIZ) <br> * page 9, lines 12 - 37 * * page 13, line 2 - page 14, line 30; figures 1, 3 * | 1,3,4,6, 9-12 | |
| A | US-A-4 510 919 (BENMUSSA) <br> * column 5, lines 34 - 57; figure 6 * | 1 | |

|  |
|---|
| TECHNICAL FIELDS SEARCHED (Int. Cl.5) |
| A 47 J <br> F 24 J |

The present search report has been drawn up for all claims

| Place of search | Date of completion of search | Examiner |
|---|---|---|
| The Hague | 24 January 91 | BODART P.A. |